# EUROPEAN PATENT APPLICATION

(11) **EP 1 369 385 A1**
(43) Date of publication of application: **10.12.2003**
(21) Application number: 03291127.3
(22) Date of filing: 14.05.2003
(51) Int. Cl.: C02F 1/50, C02F 1/28, B01D 35/04, C02F 1/44

(54) **Method and apparatus for preventing microbial growth in drinking water**

(30) Priority: 03.06.2002 US 161111
(71) Applicant: COMPAGNIE GENERALE DES EAUX, F-75008 Paris (FR); USF Consumer & Commercial Watergroup, Inc., Northbrook, IL 60062 (US)
(72) Inventor: Yang, Vue X., Sheboygan, WI 53081 (US); Hatch, Gary L., Sheboygan, WI 53081 (US); Sublet, Renaud, 95240 Cormeilles en Parisis (FR)
(74) Representative: Intès, Didier Gérard André

(57) **Abstract**

A drinking water filter inhibits retrograde bacteria growth at the user outlet with the combination of a non-carbonaceous submicron filter element immediately upstream of the system outlet and a copper orifice element in the outlet downstream of the filter element. The copper orifice element preferably comprises a thin copper disc having a single orifice. The submicron filter element preferably comprises a hollow fiber bundle filter element.

## Description

### BACKGROUND OF THE INVENTION

The present invention pertains to the purification of drinking water and, more particularly, to a method and apparatus for inhibiting the retrograde growth of heterotrophic organisms in point of use (POU) drinking water purification systems.

Many kinds of heterotrophic organisms are present in drinking water, as they are generally throughout the environment. Heterotrophic bacteria are also found in the air, on the skin, and in food. It has been noted, however, that in point of use water treatment systems, such as countertop or under-the-counter water filters, there may be a proliferation of heterotrophic bacterial growth that originates from the drinking water system outlet, e.g. a faucet outlet. This retrograde bacteria growth can cause negative aesthetic effects, such as slim and scum growth in the outlet orifice. Also, although potentially harmful microorganisms could also enter the outlet orifice from a foreign source coming in contact with the outlet, heterotrophic organisms have not been found to present adverse effects on human health. It is known, however, that with the use of domestic water treatment systems that remove chlorine from drinking water, retrograde growth of heterotrophic organisms may proliferate much more rapidly. In particular, household water treatment systems utilizing an activated carbon filter element as the final filter have been found to promote retrograde heterotrophic microbe growth. This may be due both to removal of chlorine from the water leaving the carbon filter and because the activated carbon material adsorbs organic matter making it an ideal food source for retrograde growth of heterotrophic bacteria entering the system outlet from the outside.

In addition to eliminating the negative aesthetic effects of retrograde microbe growth, it would be desirable to inhibit or prevent retrograde bacterial growth for health reasons as well. Although there is presently no significant evidence that heterotrophic bacteria growth in POU water treatment systems is a health hazard, it would be desirable to provide a sanitary outlet delivery orifice for such systems that does prevent retrograde heterotrophic bacterial growth.

It has long been known that certain metal ions, such as silver and copper, possess anti-microbial properties. However, the use of silver is carefully regulated or prohibited in many countries for use in drinking water systems. The use of copper is also regulated in drinking water, the USEPA action level being 1.3 mg/L. Therefore, the use of copper is generally discouraged or precluded in drinking water systems.

### SUMMARY OF THE INVENTION

In accordance with the present invention, it has been found that a simple metallic copper orifice element placed directly at the system outlet, and preferably immediately downstream from a non-carbonaceous submicron filter element, controls retrograde bacterial growth in the outlet without releasing significant concentrations of copper ion into the water. In accordance with the most basic aspect of the present invention, an apparatus for inhibiting retrograde bacteria growth in the outlet of a drinking water supply system comprises the combination of a non-carbonaceous submicron filter element upstream of the system outlet and a copper orifice element in the outlet downstream of the submicron filter element.

Preferably, the copper orifice element comprises a metallic copper disc having a single orifice therein. The copper orifice element may also comprise a copper wool pad or a bed of particulate copper.

The submicron filter element preferably comprises a hollow fiber bundle filter element. The hollow fiber filter element may also include a porous carbon prefilter element.

In accordance with a preferred embodiment of the invention, the apparatus is utilized in a point of use water filter system having a final filter element. The preferred apparatus includes a non-carbonaceous submicron post filter element positioned downstream of the final filter element and upstream of the outlet, and a copper orifice element mounted in the outlet downstream of the post filter element. Typically, the system final filter element comprises a carbon filter element. The submicron post filter element most preferably comprises a hollow fiber bundle filter and the orifice element is a metallic copper disc with a single orifice therein.

The apparatus of the present invention, in one specific embodiment, may be incorporated in a faucet filter device including a housing having an inlet adapted for attachment to the faucet and an outlet for delivering filtered water, within the housing is a non-carbonaceous submicron filter element mounted between the inlet and the outlet, and a copper orifice element in the outlet downstream of the filter element. In the presently preferred faucet filter device, the submicron filter is a hollow fiber bundle filter and the orifice element is a metallic copper disc having a single orifice therein. An activated carbon filter element is preferably housed upstream of the submicron filter element.

The corresponding basic method of the present invention comprises the steps of (1) mounting a non-carbonaceous submicron filter in the flow path upstream of the outlet of a drinking water supply system, and (2) mounting a copper orifice element in the flow path at the outlet. In a variation of the preceding method, the method is applied to inhibit retrograde bacteria growth at the outlet of a drinking water filter system of the type having a final carbon filter element, the method comprising the steps of (1) filtering the water from the carbon filter element with a non-carbonaceous submicron filter element, and (2) passing the water from the submicron filter element through a copper orifice mounted in the system outlet. Preferably, the filtering step comprises the use of a hollow fiber bundle filter element and the copper orifice is provided by a metallic copper disc having a single orifice therein. The method also preferably includes mounting the submicron filter element and the copper disc in a common housing.

### BRIEF DESCRIPTION OF THE DRAWINGS

Fig. 1 is a side elevation view of a faucet filter of the type utilizing the present invention.
Fig. 2 is a vertical section through a faucet filter including a preferred embodiment of the present invention.
Fig. 3 is an isometric view of the metallic copper orifice element of the faucet filter shown in Fig. 1.
Figs. 4 and 5 are graphs of test results studying the bacteriostatic capabilities of filter units of the type shown in Fig. 1 with and without the copper orifice element of Fig. 3 and with and without an effective submicron filter element.
FIG. 6 is a graph of the results of comparative tests of filter units using the copper orifice element and the same type of filter units with the copper element replaced with a stainless steel orifice element.
FIG. 7 is a bar graph showing the reduction in bacterial growth when a stainless steel orifice element is replaced with a unit having a copper element.

### DETAILED DESCRIPTION OF THE PREFERRED EMBODIMENT

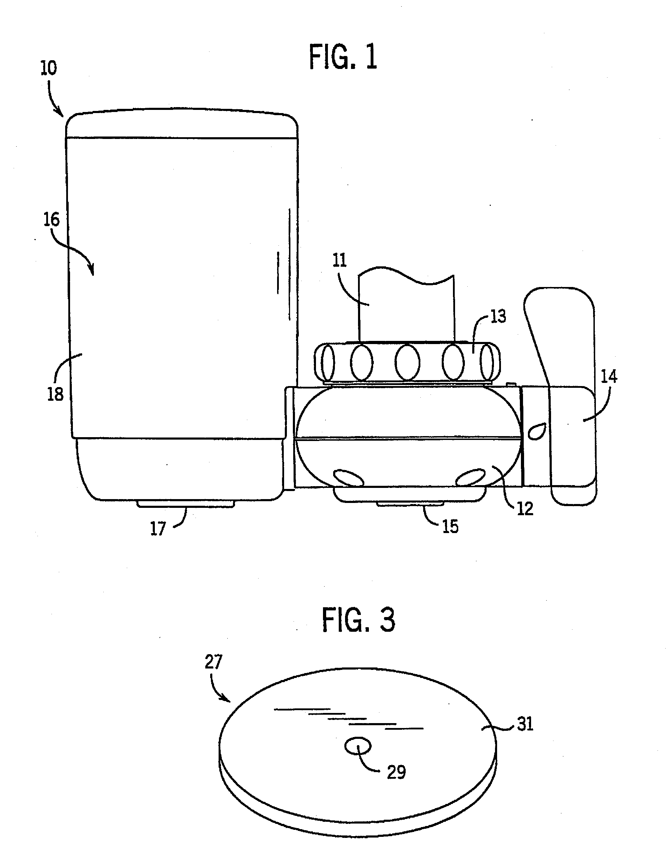

A faucet filter 10 shown in Fig. 1 is adapted to be connected to the outlet end of a conventional drinking water supply faucet 11. The faucet filter 10 includes a valve body 12 having a connector 13 for demountable attachment to the outlet end of the faucet 11 and a manually operable control handle 14. The control handle is movable from an off position to either of a by-pass position where water from the faucet flows directly through the connector 13 to an untreated water outlet 15 or a filter position where water from the connector is delivered into an attached filter cartridge 16. Water directed to and treated in the cartridge 16 is delivered to the user via a treated water outlet 17 at the bottom of the cartridge.

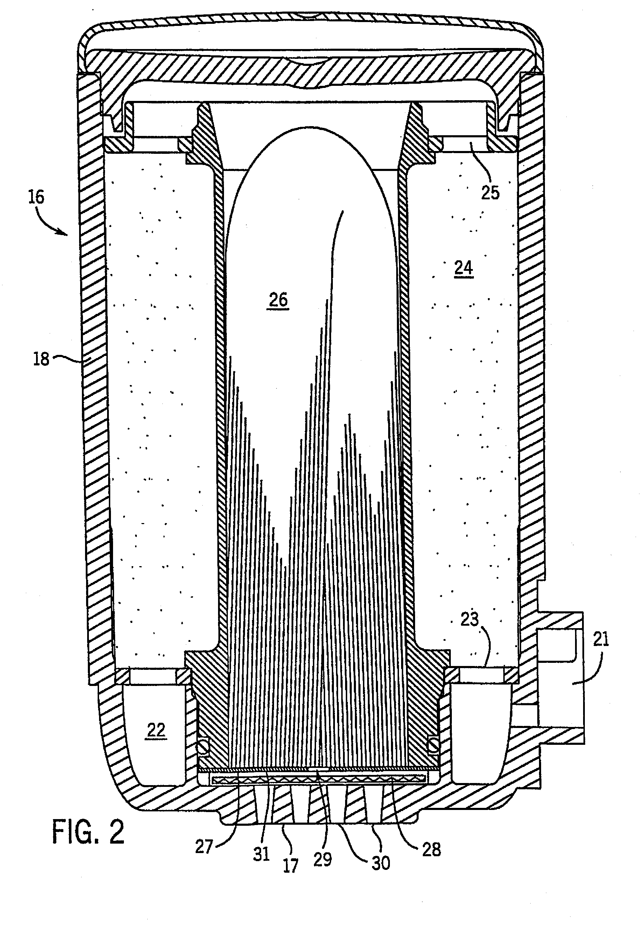

Referring to the sectional view through the filter cartridge 16 shown in Fig. 2, untreated water from the valve body 12 enters the cartridge housing 18 via an inlet 21. The water flows into an annular inlet channel 22 near the bottom of the housing 18 and initially upwardly through a lower retaining screen 23 into and through a fixed bed of filter material 24, preferably activated carbon, out an upper retaining screen 25, and into the upper end of a non-carbonaceous filter element 26, preferably a submicron hollow fiber bundle filter. Filtered water leaving the hollow fiber filter element 26 is directed through an orifice element 27 comprising a rigid disc having a single small center orifice 29 (e.g. 2 mm) and into and through a thin porous filter pad 28 made for example of polypropylene fibers. The treated water outlet 17 at the bottom of the housing 18 comprises a pattern of outlet holes 30. Preferably, there is no outlet hole 30 directly below and in line with the orifice 29 in the orifice disc element 27. This permits dispersion of the water through the outlet holes 30.

The faucet filter thus far described is of a conventional construction, one embodiment thereof being sold by Culligan Corporation as a model FM-5 faucet filter.

Recent studies of point of use (POU) filter systems have looked at the development of aerobic bacteria at the treated water outlet (outlet 17 in the faucet filter described above). These so-called heterotrophic bacteria invade the system from outside, resulting in retrograde bacterial growth within the outlet portion of the filter unit. In the example described above, the hollow fiber filter element 26 presents a barrier to further retrograde growth, however, heterotrophic bacterial growth is known to occur from the interface between the fiber filter element 26 and the orifice element 27 all the way to the outlet holes 30 at the treated water outlet 17. Retrograde bacteria growth has not been made the subject of regulatory control and studies of POU systems have not disclosed any significant adverse health effects. Nevertheless, the adverse aesthetic effects of retrograde bacteria growth in the outlet region of POU water treatment systems, along with the potential concern for adverse health effects, have spurred a search for an easy and economical solution to the problem and have led to the subject invention.

Heterotrophic bacteria comprise a ubiquitous group of microorganisms contained in all drinking water as well as the ambient atmosphere, and are generally considered to be innocuous. Nevertheless, the concentration of heterotrophic bacteria (heterotrophic plate counts or HPCs) has already been made the subject of at least informal water quality standards. The USEPA has adopted an informal standard of 500 colony forming units (CFUs) of heterotrophic bacteria per milliliter and, in Europe, the standard is substantially more strict. The most common and direct reason for high HPC in a POU filter system is the use of a carbon filter as the final filter element. A carbon filter removes chlorine from the water and also adsorbs organic matter in the water. At the outlet of the carbon filter element, there is no chlorine to kill the heterotrophic bacteria and the situation is exacerbated by the presence of organic matter providing a good food source for bacterial growth.

In the prior art faucet filter described above, the interposition of the non-carbonaceous hollow fiber filter element 26 between the carbon filter bed 24 and the outlet 17 provides a barrier against retrograde migration of heterotrophic bacteria to the organic food source in the carbon filter. Although this has the effect of slowing retrograde bacteria growth, such growth is not prevented and still occurs to a significant extent in the region of the outlet from the fiber filter 26, the orifice element 27, porous filter bed 28 and the outlet holes 30 from the system.

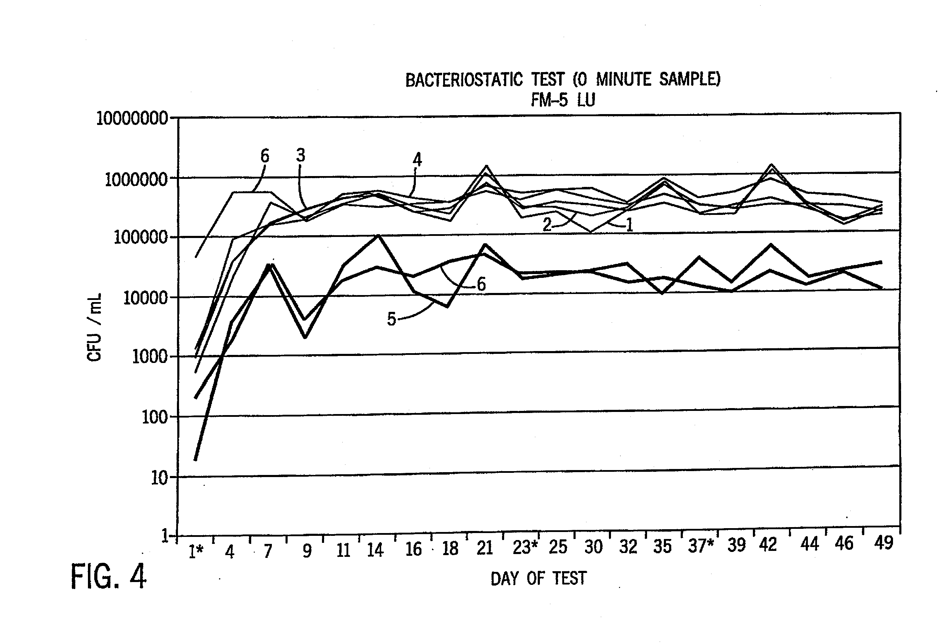

In the prior art faucet filter 10, the rigid disc comprising the orifice element 27 is typically made of stainless steel. In accordance with the present invention, a metallic copper disc 31 (Fig. 3) is substituted for the stainless steel disc. Quite surprisingly, the copper disc appears to act in combination with the hollow fiber filter element 26 to substantially inhibit retrograde bacteria growth in the outlet region of the faucet filter 10.

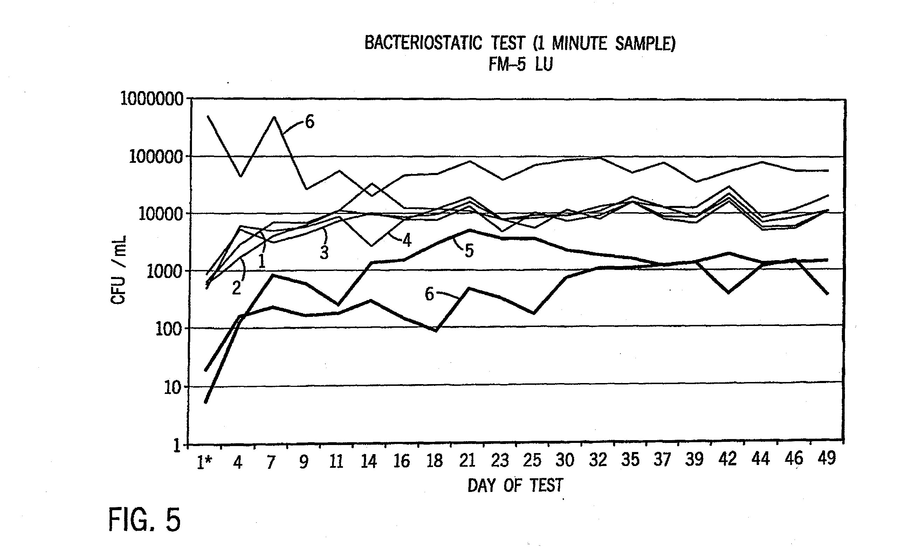

Figs. 4 and 5 are the graphic representations of comparative tests made of a conventional FM-5 faucet filter utilizing a standard stainless steel orifice element 27 and modified FM-5 filter units utilizing metallic copper disc orifice elements 31. The tests also included units with the hollow fiber bundle elements cut open and disabled and having either a stainless steel disc or a copper disc. Tests were run over a seven (7) week period and samples were taken for analysis at approximately three (3) day intervals over the test period. All units were operated at a pressure of 60 psig, a nominal flow rate of 0.6 gpm, and all filters were operated for one minute each hour for 16 hours per day with weekend shutdown. The Fig. 4 graph shows the results of the samples taken when the system is initially turned on (0 Minute Sample) and the Fig. 5 graph shows samples taken at one minute after turn-on (1 Minute Sample). The graphs represent heterotrophic bacteria concentration in CFU/mL. The top trace 6 in each graph is the influent concentration. In each of the Fig. 4 and Fig. 5 graphs, traces 1 and 2 show the performance of filter units having copper discs and with the fiber bundle elements cut open. Traces 3 and 4 show the performance of filter units having stainless steel orifice discs and with the hollow fiber bundle elements cut open. Traces 5 and 6 show the performance of filter units made in accordance with the preferred embodiment of the present invention using copper orifice discs and an operable hollow fiber bundle element. In all cases, the filters utilizing the combination of a copper disc orifice element and a hollow fiber bundle filter element performed better than the other modified filter devices. Copper ion concentrations at the outlet openings did not exceed 0.011 mg/L. This is significantly below the USEPA maximum limit of 1.3 mg/L.

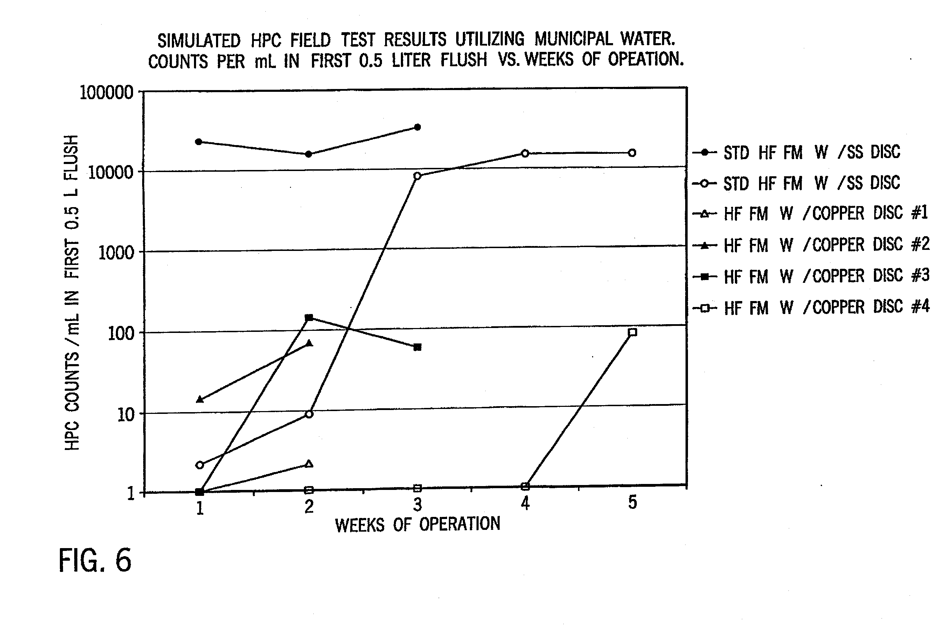

The graph of Fig. 6 shows the results of simulated field tests utilizing a municipal water supply and conventional FM-5 filter units, two of which had stainless steel orifice elements and the other four of which utilized copper orifice elements in accordance with the present invention. In all cases, after two weeks of operation, the results demonstrate clearly that the stainless steel orifice elements did not prevent bacterial growth and the development of high HPCs. The units using the copper orifice elements, on the other hand, retained consistently low heterotrophic plate counts (HPCs) and, after two weeks of operation, the units on tests with copper orifice elements exhibited HPCs more than two orders of magnitude lower than the corresponding unit with a stainless steel orifice element.

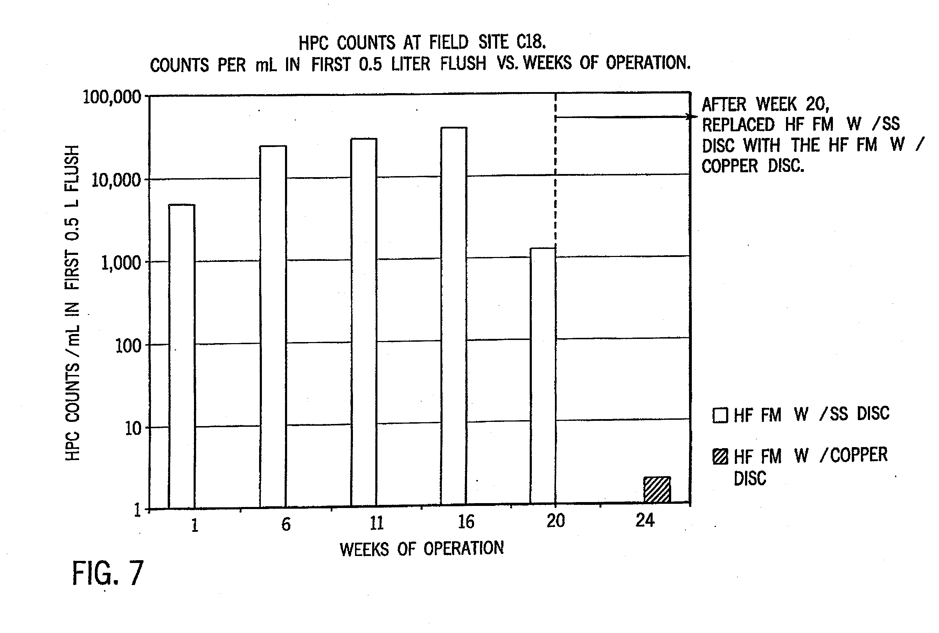

The bar graph in Fig. 7 shows the results of an actual field test in which an FM-5 unit having a stainless steel orifice element was operated for 20 weeks, after which it was replaced in the system with a similar FM-5 unit with a copper orifice element. The unit having the stainless steel element quickly developed high HPCs and the high level remained consistently throughout the 20 week period. The replacement unit with the copper orifice element showed a clear control of HPCs after four weeks of operation.

The Table 1 below shows the measurement of HPC counts in a number of different kinds of filter modules, none of which modules utilized the unique combination of a non-carbonaceous submicron filter element directly adjacent a copper orifice outlet element. As indicated, measurements were taken over a three week period of operation from samples taken during the initial 0.5 L operation of the filter unit. In the first unit shown in the Table, comprising a carbon block filter element and no other orifice or filter element, there was a steady growth in HPCs over the three week period. The next filter unit was like the first, and, similarly, showed a high HPC count over the three week test period. Units 3 and 4 in Table 1 comprised conventional carbon block filters followed by a copper orifice element. The weeks marked with a "-" for these units indicate that no test data was taken. However, with the limited results that were obtained, the initial high HPC count in each of the filters indicates an initial high HPC growth and, in the measurement made after two weeks of operation with the second unit, although the HPC count had been reduced considerably, it was still much higher than the filter units shown in the Fig. 6 graph utilizing the combination of the hollow fiber bundle filter element followed by the copper disc in the outlet opening.

The fifth filter unit shown in Table 1 was a commercially available membrane filter without any type of metal orifice element. The measurements over the three week period show a progressive growth in HPC counts similar to the carbon block filter of the first unit tested.

**TABLE 1**

| SIMULATED FIELD TEST RESULTS UTILIZING MUNICIPAL WATER | | | |
|---|---|---|---|
| | HPC COUNTS/mL in 1^{st} 0.5 L Flush - WEEKS OF OPERATION | | |
| **Unit Description** | **1** | **2** | **3** |
| FM w/ carbon block, w/o SS disc, competitor filter; commercially available | 0 | 11,300 | 55,000 |
| FM w/ carbon block, w/o PP pad and SS disc | 700 | 24,300 | 2,900 |
| FM w/ carbon block and **copper disc-#1** | >15,000 | - | - |
| FM w/ carbon block and **copper disc-#2** | >15,000 | 582 | - |
| FM w/ membrane, W/O disc, competitor filter; commercially available | 0 | 536 | 56,000 |
| | | | |
| [All HPC counts measured at 22 degrees C per French/European Norm 68H (NF EN IS06222)] | | | |

It is also believed that copper orifice elements made from a copper wool pad or from a bed of particulate copper would be effective in the reduction of the heterotrophic bacteria concentrations. However, such modified orifice elements, presenting a much greater active surface area, could result in significant higher copper ion concentrations at the outlet.

Although the preferred embodiment of the present invention utilizes a hollow fiber bundle element as preferred non-carbonaceous submicron filter, other non-carbonaceous filter elements such as of a ceramic construction may also be utilized. Membrane filters represent another form of non-carbonaceous submicron element that could be utilized.

Preferred polymeric materials for use in the non-carbonaceous submicron filter element of the invention include polysulfone, polyvinylidene fluoride, polyethersulfone or polypropylene.

It is also known that bacterial growth will occur through a hollow fiber bundle filter, or through another type of membrane or ceramic filter element. Such "grow-through" from the upstream to the downstream side of a submicron element would also be stopped or inhibited utilizing the copper disc orifice element of the present invention. Thus, the subject invention, in addition to being effective to prevent retrograde bacterial growth, is also believed to be effective in inhibiting bacterial growth through the membrane from upstream.

## Claims

1. An apparatus for inhibiting retrograde bacteria growth in the outlet of a drinking water supply system, said apparatus comprising:
a non-carbonaceous submicron filter element (26) upstream of the system outlet; and,
a copper orifice element (27) in the outlet (17) downstream of the filter element (26).

2. The apparatus as set forth in claim 1 wherein said copper orifice element (27) comprises a copper disc (31) having a single orifice therein (29).

3. The apparatus as set forth in claim 1 wherein said copper orifice element (27) comprises a copper wool pad.

4. The apparatus as set forth in claim 1 wherein said copper orifice element (27) comprises a bed of particulate copper.

5. The apparatus according to any one of claims 1 to 4 wherein said submicron filter element (26) comprises a hollow fiber bundle filter element.

6. The apparatus as set forth in claim 5 wherein the fiber bundle filter element (26) includes a porous carbon prefilter element.

7. The apparatus according to any one of claims 1 to 5 wherein the water supply system includes a carbonaceous filter element (24) upstream of the submicron filter element (26).

8. An apparatus for inhibiting retrograde bacteria growth in the outlet of a water filter system having a final filter element, said apparatus comprising:
a non-carbonaceous submicron post filter element (26) downstream of the final filter element (24) and upstream of the outlet (17); and,
a copper orifice element (27) mounted in the outlet (17) downstream of the post filter element (26).

9. The apparatus as set forth in claim 8 wherein the final filter element (24) comprises a carbon filter element.

10. The apparatus as set forth in claims 8 or 9 wherein said submicron post filter element (26) comprises a hollow fiber bundle filter element.

11. The apparatus according to any one of claims 8 to 10 wherein said orifice element (27) comprises a metallic copper disc (31) having a single orifice therein (29).

12. A faucet filter device for inhibiting retrograde bacteria growth comprising:
a housing (18) having an inlet adapted for attachment to the faucet (11) and an outlet (17) delivering filtered water;
a non-carbonaceous submicron filter element (26) mounted in the housing (18) between the inlet and the outlet (17); and,
a copper orifice element (27) in the outlet (17) downstream of the filter element (26).

13. The device as set forth in claim 12 including a carbon filter element (24) in the housing (18) upstream of the submicron filter element (26).

14. The device as set forth in claims 12 or 13 wherein said orifice element (27) comprises a copper disc (31) having a single orifice (29).

15. A method for inhibiting microbial growth in the outlet of a drinking water supply system comprising the steps of:
(1) mounting a non-carbonaceous submicron filter (26) in the flow path upstream of the outlet (17); and,
(2) mounting a copper orifice element (27) in the flow path at the outlet (17).

16. The method as set forth in claim 15 comprising the step of providing a copper orifice element (27) made of a metallic copper disc (31) having a single orifice therein (29).

17. The method as set forth in claim 15 or 16 comprising the step of providing a submicron filter (26) made of a hollow fiber bundle element.

18. A method for inhibiting retrograde bacteria growth at the outlet of a drinking water filter system of the type having a final carbon filter element (24), said method comprising the steps of:
(1) filtering the water from the carbon filter element (24) with a non-carbonaceous submicron filter element (26); and,
(2) passing the water from the submicron filter element (26) through a copper orifice (27) mounted in the system outlet (17).

19. The method as set forth in claim 18 wherein said filtering step comprising utilizing a hollow fiber bundle filter element.

20. The method as set forth in claims 18 or 19 wherein said passing step comprises utilizing a metallic copper disc (31) having a single orifice therein (29).

21. The method as set forth in claim 20 including the step of mounting said submicron filter element (26) and said copper disc (31) in a common housing (18).
